(19) Europäisches Patentamt
European Patent Office
Office européen des brevets

(11) EP 4 170 764 A1

(12) EUROPEAN PATENT APPLICATION

(43) Date of publication:
**26.04.2023 Bulletin 2023/17**

(21) Application number: **21203408.6**

(22) Date of filing: **19.10.2021**

(51) International Patent Classification (IPC):
***H01M 8/18*** *(2006.01)* ***H01M 8/04029*** *(2016.01)*
***H01M 8/04007*** *(2016.01)* ***C25B 15/021*** *(2021.01)*
***C25B 9/15*** *(2021.01)* ***H01M 8/22*** *(2006.01)*
***H01M 8/04014*** *(2016.01)* ***F25B 9/14*** *(2006.01)*
***F25B 23/00*** *(2006.01)* ***H01M 14/00*** *(2006.01)*

(52) Cooperative Patent Classification (CPC):
**H01M 14/00; C25B 9/15; C25B 15/021; H01M 8/04014; H01M 8/04029; H01M 8/04074; H01M 8/182; H01M 8/188; H01M 8/22;**
H01M 2220/10

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Haese, Frank**
**18435 Stralsund (DE)**

(72) Inventor: **Dr. Haese, Frank**
**18435 Stralsund (DE)**

(74) Representative: **Hoffmann Eitle**
**Patent- und Rechtsanwälte PartmbB**
**Arabellastraße 30**
**81925 München (DE)**

# (54) DEVICE FOR CONVERTING THERMAL ENERGY OF AN EXTERNAL HEAT SOURCE INTO ELECTRICAL ENERGY INCLUDING A THERMOLABILE COMPOUND

(57) The present invention relates to the generation and storage of electrical energy by conversion of thermal energy of an external heat source into electrical energy and the possibility of heat storage, without the need of any external power sources. This is achieved by a device according to the present invention comprising a positive electrode half-cell comprising a positive electrode and a positive electrode electrolyte, a negative electrode half-cell comprising a negative electrode and a negative electrode electrolyte, means for heating the positive electrode electrolyte and/or negative electrode electrolyte and a thermolabile compound of the following formula 1:

$$M^{[+x]}Br^{[-1]}{}_x \qquad \text{[Formula 1]}$$

wherein M is selected from the group consisting of Fe, Cu, Mo and W, wherein [+x] indicates the oxidation state of M, [-1] indicates the oxidation state of Br, and x is an integer of 2 when M is Cu, is an integer of 3 when M is Fe or W and is an integer of 4 when M is Mo. According to the invention, the thermolabile compound is present in a divided form, such that the positive electrode electrolyte comprises the cation $M^{[x+1]}$, with [x+] indicating the charge of the cation and x being an integer as defined above, and further thermally stable spectator anions for charge compensation, and the negative electrode electrolyte comprises the anion $Br^-$ and further thermally stable spectator cations for charge compensation. Based on the device according to the invention, the present invention also relates to a module, an energy saving system and a battery.

EP 4 170 764 A1

## Description

### TECHNICAL FIELD

The present invention relates to a device for converting thermal energy of an external heat source into electrical energy including a thermolabile compound and to a method of converting thermal energy of an external heat source into electrical energy by using said device. Furthermore, the present invention concerns a module comprising two or more of said devices as well as an energy saving system comprising said device and a capacitor, a superconducting magnetic energy storage system or an accumulator. Also, the present invention relates to a battery including a thermolabile compound and a method of charging the battery by converting thermal energy of an external heat source into chemical energy.

### TECHNICAL BACKGROUND

Globally, there is an ever-increasing demand for the generation of electrical energy and the development of energy storage systems. Reasons for that include the growing world population, an increasing scarcity of fossil fuels, a worldwide conversion in the transportation and mobility sector to electric drives, as well as climate change with increasing demand for energy-intensive air-conditioning technologies. Of particular interest for the production and storage of electrical energy is the use of sustainable sources.

Batteries have been around since the 1800s, which are known to convert stored chemical energy into electrical energy. Advances in technology and falling prices mean grid-scale battery facilities that can store increasingly large amounts of energy are enjoying record growth.

The entrenched market leader are Li-ion batteries. However, with flow batteries having been reported to show lower degradation, improved safety, and longer-duration capability compared to their Li-ion counterparts, they represent a serious competition. Redox flow batteries (RFB), e.g., are capable of storing excess energy, typically surplus energy from renewable sources, such as wind or sunlight, in the form of chemical energy (M. Skyllas-Kazacos et al., Journal of The Electrochemical Society, 158 (8) 55-79, 2011). The redox flow battery essentially consists of three components. The first component is the cell, consisting of a membrane and two electrodes, similar to the fuel cells. The other two components are the tanks for storing the electrolyte fluids. The two electrolyte liquids are of different concentrations or valences and are each fed via a pump in separate circuits to one electrode each.

Disadvantages for flow batteries, however, include expensive fluids that are also corrosive or toxic, and the balance of system costs are relatively high along with the parasitic (on-site) load needed to power the pumps.

The market leader in flow battery chemistry is vanadium. Since vanadium is expensive, not easily accessible and subject to market fluctuations, researchers are working on other chemistries to bring down costs and improve the safety and environmental profile of flow batteries. US 2018/0233763 A1, e.g., discloses a copper based redox flow cell comprising in the negative half-cell the redox couple $Cu^{1+}/Cu^0$ and in the positive half-cell any suitable redox couple including halogens, such as $Cl^-/Cl_2$ or $Br^-/Br_2$ couple, $Fe^{2+}/Fe^{3+}$ couple, or $Cu^+/Cu^{2+}$ couple. Also, an all-copper flow battery comprising the redox couple $Cu^{1+}/Cu^0$ in the negative electrode half-cell and the redox couple $Cu^+/Cu^{2+}$ in the positive electrode half-cell have been reported (J.S. Wainright et al., "Investigation a bromide supported elekctrolyte for an all-copper flow battery", Journal of the Electrochemical Society, 2018, 165 (9), A1797-A1804).

The biggest drawback of RFB, however, is that they need to be charged with the electricity they are intended to store and later release. This fundamental disadvantage requires an external power source and is always associated with power losses due to irreversible side reactions, especially unwanted heat generation, when charging and discharging the batteries. Also, pumps for circulation of the electrolytic solutions are necessary, requiring an external power source for commissioning. The fact that storage and generation of electrical energy must be spatially separated to avoid power losses due to back-mixing of the electrolytes and the presence of pumps make RFB furthermore bulky and cost intensive. Also, production of unwanted hydrogen gas may not completely be avoided, leading to less efficiency and damage of the RFB. With cyclic electrodeposition of elemental metal, such as copper, there is always a risk of uneven deposition or re-dissolution and dendrite formation, which leads to the need of increased maintenance of the RFB and furthermore may damage the cell by short-circuiting.

To address some of these drawbacks, technologies are being investigated that are designed to generate electricity directly from heat.

Several different systems for direct conversion of heat to electricity have been reported. For example, a redox flow battery for heat to power conversion has been suggested in WO 2019 066651 A1. This system combines a redox flow battery with new redox partners, such as hexacyanoferrate ($Fe(CN)_6^{4-/3-}$) and polyiodide ($I_3^-$ to $3I^-$), having opposite dependency on temperature. However, all disadvantages described above in connection with RFB likewise apply to the heat to power conversion system. A further disadvantage is that hexacyanoferrate is temperature-sensitive and decomposes at temperatures above 80°C. Therefore, operation of the system is limited to relatively low temperatures, whereby

attractive higher temperatures resulting from, e.g. heat waste, cannot be used. In addition, the heat to power conversion systems show low capacities and low power densities due to the use of dilute solutions and high molar masses of the redox compounds.

Also reported are galvanic thermo- and concentration-cells. J.-M. Lancette, R. Roussel, "A concentration cell with intercalated bromine", Can. J. Chem., 1976, 54, pp. 3541-3544; and K. Shindo et al., "Influence of electrode materials on open-circuit voltage profiles with a temperature difference for a thermocell using a Br2/Br-redox reaction", Journal of Power Sources 2002, 110, pp. 46-51, both disclose such cells using a $Br_2/Br^-$ redox reaction. The disadvantages are the comparatively low voltages (max. 0.1 V) and power, as well as the lack of energy storage. Further disadvantages are that electricity is generated in one direction only. The process is irreversible and requires complete reprocessing of the electrolytes after each cycle.

An alternative approach is the direct thermal charging cell (DTCC). Xun Wang et al, "Direct thermal charging cell for converting low-grade heat to electricity", Nature Communications, 2019, 10, pp. 4151, discloses such a DTCC. The cell consists of asymmetric electrodes, a graphene oxide-platinum nanoparticle cathode and a polyaniline anode with an $Fe^{2+}/^{3+}$ electrolyte in between. Upon heating, the cell generates voltage via a putative pseudocapacitive effect of graphene oxide by proton uptake from the electrolyte and a thermogalvanic effect of $Fe^{2+}/^{3+}$, and discharges continuously by the oxidation of polyaniline combined with the reduction of $Fe^{3+}$ under isothermal heating. The cell regenerates upon cooling. No external power source or temperature gradient during charging and discharging is needed. However, regeneration occurs only in one direction during cooling. Other disadvantages are the temperature range of 40-90°C only, which is limited by the boiling point of the electrolyte used. Electricity is only generated in one direction and the Carnot efficiency is relatively low. After only 20 cycles, a significant drop in reversibility could be observed. Other problems include leakage of the electrolyte and cracks forming on the electrodes.

In addition, modern energy storage systems, such as those used in electromobility, are also dependent on increasingly large quantities of expensive and rare raw materials such as platinum, cobalt, manganese, rare earth metals, lithium, nickel, copper, and boron, to name just a few of them.

In summary, the disadvantages common to all the above technologies are that they have low efficiencies, low power densities (no short-term high current flow), low energy densities (no long runtime at base current consumption), and no or no significant storage possibilities. Furthermore, the systems are not economical, not operable in a continuously stable manner and/or are operation intensive and some systems need external additional power sources. Also, all the above technologies allow harvesting of electricity only once per cycle.

## SUMMARY OF THE INVENTION

In view of the above, it is an object of the invention to provide a system capable of converting heat, i.e. thermal energy, into electrical energy in a reversible manner while ensuring sufficiently high cell voltages and having excellent efficiency and cycle life without the need of external power sources. The system should allow for the storage of electrical energy and heat.

This aim is achieved by a device for converting thermal energy of an external heat source into electrical energy, comprising a positive electrode half-cell comprising a positive electrode and a positive electrode electrolyte; a negative electrode half-cell comprising a negative electrode and a negative electrode electrolyte; a conductive connection between the positive electrode half-cell and the negative electrode half-cell; means for heating and optionally means for cooling the positive electrode electrolyte and/or negative electrode electrolyte; and a thermolabile compound of the following formula 1:

[Formula 1] $M^{[+x]}Br^{[-1]}{}_x$

wherein M is selected from the group consisting of iron (Fe), copper (Cu), molybdenum (Mo) and tungsten (W), wherein [+x] indicates the oxidation state of M, [-1] indicates the oxidation state of bromide (Br), and x is an integer of 2 when M is Cu, is an integer of 3 when M is Fe or W and is an integer of 4 when M is Mo.

The thermolabile compound is present in a divided form in said device, such that the positive electrode electrolyte comprises the cation $M^{[x+]}$, with [x+] indicating the charge of the cation and x being an integer as defined above, and further thermally stable spectator anions for charge compensation; and the negative electrode electrolyte comprises the anion $Br^-$ and further thermally stable spectator cations for charge compensation.

The positive electrode half-cell and the negative electrode half-cell are linked to each other, such that the spectator cations can migrate between the half-cells but not the cation $M^{[x+]}$, the anion $Br^-$ and also not a cation $M^{[(x-1)+]}$ and $Br_2$, which both come into existence by the use of the device for converting thermal energy of an external heat source into electrical energy.

A core idea of the present invention lies in the generation and storage of electrical energy by reversible direct conversion of thermal energy through heat absorption into electrical energy and the possibility of heat storage, without

the need of any external power sources. This is achieved by the device according to the present invention including the thermolabile compound in divided form. The device is, because of its unique character, in the following also named "quaternary battery", "poikilothermal generator" or "ectothermal cell".

The present invention also relates to a method of converting thermal energy into electrical energy by using said device. When the positive electrode electrolyte and/or negative electrode electrolyte each including a particular part of the thermolabile compound is heated to a temperature of 90°C to 300°C via an external heat source, a redox reaction is driven, whereby electrons flow through a conductive connection from the one half-cell to the other half-cell. Thereby a current flow is generated, which either allows for direct use, storage or power conversion of the same to convert direct current into alternating current, change the voltage and/or frequency of the current. Upon active or passive cooling of the previously heated positive electrode electrolyte and/or negative electrode electrolyte, the back reaction takes place, whereby electrons flow in the opposite direction through the conductive connection between the two half-cells. Thereby, a current flow is generated again, however in the opposite direction, allowing either for direct use, storage or power conversion of the same for a second time to convert direct current into alternating current, change the voltage and/or frequency of the current.

That is, the generation of electric energy is driven by a reversible change of temperatures in the half-cells in both directions, i.e. from hot to cold and *vice versa,* by making use of the working principle of the thermolabile compound. This allows for harvesting electric energy twice per cycle, which greatly improves the efficiency of the device.

The heating and cooling steps can be repeated as often as required and can be interrupted and resumed at any point without damaging the device and without power loss or the occurrence of a memory effect. The device is capable of deep discharge and can be discharged to a final discharge voltage of 0 V without damage.

The device according to the present invention is modular, scalable, and voltages and currents can be adjusted by connecting two or more devices in series or in parallel. Therefore, the present invention also relates to a module comprising two or more of said devices. This allows the use of the device in e.g. households, industry and long-distance networks. Furthermore, the device according to the present invention simultaneously allows for the storage of thermal energy in the form of heat in one or both half-cells, which is of particular interest when stacking two or more devices according to the present invention to form the module according to the present invention.

Also, the device according to the present invention may be coupled to a capacitor, a superconducting magnetic energy storage system or an accumulator to form an energy saving system. The present invention also relates to such energy saving system for storing the electrical energy generated by the device.

In addition, the device may be used to form a battery. The present invention therefore also relates to a battery. The battery is structured in the same way as the device according to the present invention. That is, the battery comprises a positive electrode half-cell comprising a positive electrode and a positive electrode electrolyte; a negative electrode half-cell comprising a negative electrode and a negative electrode electrolyte; a conductive connection between the positive electrode half-cell and the negative electrode half-cell; and a thermolabile compound as defined above in connection with the device.

In the discharged state of the battery, the positive electrode electrolyte comprises the cation $M^{[x+]}$ with x being an integer as defined in claim 1 and further thermally stable spectator anions for charge compensation, and the negative electrode electrolyte comprises the anion $Br^-$ and further thermally stable spectator cations for charge compensation.

In the charged state of the battery, the positive electrode electrolyte comprises the cation $M^{[(x-1)+]}$ with x being an integer as defined above and further thermally stable spectator anions for charge compensation, and the negative electrode electrolyte comprises $Br_2$.

Furthermore, the positive electrode half-cell and the negative electrode half-cell are linked to each other, such that the spectator cations can migrate between the half-cells but not the cations $M^{[x+]}$ and $M^{[(x-1)+]}$, the anion $Br^-$ and $Br_2$.

The battery allows storage of energy in a chemical form and conversion of the chemical energy into electrical energy when needed, i.e. upon usage of the battery, such as conventional batteries.

The present invention furthermore relates to a method of charging the battery. When the positive electrode electrolyte and/or negative electrode electrolyte each including a particular part of the thermolabile compound is heated to a temperature of 90°C to 300°C via an external heat source, a redox reaction is driven, whereby electrons flow through a conductive connection from the negative electrode half-cell to the positive electrode half-cell, thereby charging the battery. The battery is fully charged as soon as all cations $M^{[x+]}$ have been reduced to $M^{[(x-1)+]}$ and all $Br^-$ has been oxidized to $Br_2$. As soon as the battery is fully charged, the conductive connection between the two half-cells may be interrupted followed by active or passive cooling of the previously heated positive electrode electrolyte and/or negative electrode electrolyte to ambient temperature. The charged battery comprises in the positive electrode electrolyte the cation $M^{[(x-1)+]}$ and in the negative electrode electrolyte $Br_2$. These components are thermodynamically stable at elevated temperature. At ambient temperature, components $M^{[x+]}$ and $Br^-$ are the thermodynamically stable components. However, because the conductive connection between the half-cells is interrupted, conversion to the thermodynamically stable components at ambient temperature is prevented as long as the battery is stored, i.e. not in use.

Implemented thermal energy may thus be converted into chemical energy, which may be stored in that form

and converted into electrical energy when needed. This is simply done by establishing a conductive connection between the positive electrode half-cell and the negative electrode half-cell upon usage of the battery. The battery generates electrical energy as long as the back reaction of the redox reaction takes place. As soon as the battery is discharged, i.e. all cations $M^{[(x-1)+]}$ have been oxidized to $M^{[x+]}$ and all $Br_2$ has been reduced to $Br^-$, it may be charged again by implementing heat. This may be repeated as often as desired without damaging the battery.

**Detailed Description**

[*Device for converting thermal energy of an external heat source into electrical energy*]

The present invention relates to a device for converting thermal energy of an external heat source into electrical energy comprising a positive electrode half-cell, a negative electrode half-cell, means for heating the positive electrode electrolyte and/or negative electrode electrolyte and a thermolabile compound of the following formula 1:

[Formula 1] $M^{[+x]}Br^{[-1]}_x$

wherein M is selected from the group consisting of Fe, Cu, Mo and W, wherein [+x] indicates the oxidation state of M, [-1] indicates the oxidation state of Br, and x is an integer of 2 when M is Cu, is an integer of 3 when M is Fe or W and is an integer of 4 when M is Mo.

Generally, it is well known that metals may form a variety of compounds with different halides. Depending on the type of metal and halide, thermal decomposition at relatively high temperatures may be observed for some compounds. In particular cases, this property is technically used for chemical transport or purification processes. Well known is e.g. the Van-Arkel-de-Boer process for the commercial production of, e.g., pure ductile titanium with iodine involving the formation of $TiI_4$.

In general, decomposition temperature and reaction behavior depend on the type of metal and halide used. In particular cases, the decomposition of the compounds is reversible, meaning that the compound, which is decomposed upon reaching the decomposition temperature, is formed back when reaching a certain temperature below the decomposition temperature.

It is known, for example, that $CuBr_2$ thermally decomposes to CuBr and ½ $Br_2$ at a temperature of 280°C or more (D.L. Hilden, N.W. Gregory, Spectrophotometric Study of the Equilibrium between Copper (I) Bromide, Copper (II) Bromide, and Bromine, J. Phys. Chem., Vol. 75, No. 4, 1971, pp.592-595). This reaction, however, is reversible so that below said temperature, the back reaction to $CuBr_2$ takes place.

Similarly, the compound $WBr_3$ thermally decomposes to $WBr_2$ and ½ $Br_2$ at a temperature of 90°C or more (H. Schafer, R. Siepmann, Die Wolframbromide W6Br12, W6Br14, W6Brl6 und W6Br18, ZAAC, 1968, 357, pp. 273-288) . Below said temperature, the back reaction to $WBr_3$ is driven.

Also, the compound $FeBr_3$ is known to thermally decompose to $FeBr_2$ and ½ $Br_2$ at a temperature of 140°C or more (N.W. Gregory, B.A. Thackrey, An Equilibrium Study of the Thermal Dissociation of Ferric Bromide, J. Am. Chem. Soc. 1950, 72, 7, pp.3176-3178; M. Armbruster et al., Uber Eisentribromid: Untersuchungen von Gleichgewichten, Kristallstrukturen und spektroskopische Charakterisierung, Z. Anorg. Allg. Chem. 2000, 626, pp. 187-195). Below said temperature, the back reaction to $FeBr_3$ is driven.

The compound $MoBr_4$ has been reported to thermally decompose to $MoBr_3$ and ½ $Br_2$ at a temperature between 110°C and 130°C or more (Edward Roy Epperson, University of the Pacific, Dissertation, The Binary Halides of Molybdenum (IV) and Tungsten (IV) and the Oxochlorides of Tungsten (VI), 1965). Below said temperature range, the back reaction to $MoBr_4$ takes place.

In view thereof, the thermolabile compound used in the present invention is one selected from the group consisting of $CuBr_2$, $FeBr_3$, $WBr_3$ or $MoBr_4$. Preferably, the thermolabile compound is $CuBr_2$ or $FeBr_3$ from the viewpoint of its availability. More preferably, the thermolabile compound is $FeBr_3$ from the viewpoint of showing thermolabile properties within a temperature range being of particular interest when considering sustainable heat sources, such as heat waste.

In order to be able to generate electrical energy from the decomposition of these thermolabile compounds and their reversible regeneration in a continuous manner, they need to be separated into their individual ionic components within the two half-cells.

Thus, according to the invention, the thermolabile compound is present in a divided form, such that the positive electrode electrolyte comprises the cation $M^{[x+]}$, with M being selected from the group consisting of Fe, Cu, Mo and W, [x+] indicating the charge of the cation and x being an integer of 2 when M is Cu, being an integer of 3 when M is Fe or W and being an integer of 4 when M is Mo. The positive electrode electrolyte further comprises thermally stable spectator anions for charge compensation. The negative electrode electrolyte comprises the anion $Br^-$ and further thermally stable spectator cations for charge compensation.

Preferably, M is selected from Cu and Fe from the viewpoint of good accessibility, low material costs and good charge-to-mass ratio. More preferably, M is Fe in view of its non-toxicity and accessibility.

Preferably, the cation $M^{[x+]}$ is present in a concentration in the range of 0.5 mol/L to 15 mol/L, preferably 0.5 mol/L to 10 mol/L, more preferably in the range of 1 mol/L to 7 mol/L, even more preferably in the range of 2 mol/L to 5 mol/L, particularly preferably in the range of 2 mol/L to 4 mol/L and most preferably in a concentration of 3 mol/L with respect to the volume of positive electrode electrolyte. The concentration of $M^{[x+]}$ is preferably in the above ranges with the viewpoint of performance of the device in terms of achieving excellent capacity and power density. Preferably, the concentration of $M^{[x+]}$ is not below 0.5 mol/L in view of the risk of a drop of cell efficiency. Preferably, the concentration of $M^{[x+]}$ is not above 15 mol/L in view of the risk of deposits.

Preferably, $Br^-$ is present in a concentration in the range of x-fold 0.2 mol/L to 15 mol/L, preferably x-fold 0.5 mol/L to 10 mol/L, more preferably in the range of x-fold 1 mol/L to 7 mol/L, even more preferably in the range of x-fold 2 mol/L to 5 mol/L, particularly preferably in the range of x-fold 2 mol/L to 4 mol/L and most preferably in a concentration of x-fold 3 mol/L with respect to the volume of the negative electrode electrolyte with x being an integer as defined above. More preferably, $Br^-$ is present in a concentration in the range of 0.5 mol/L to 15 mol/L, preferably 0.5 mol/L to 10 mol/L, more preferably in the range of 1 mol/L to 7 mol/L, even more preferably in the range of 2 mol/L to 5 mol/L, particularly preferably in the range of 2 mol/L to 4 mol/L and most preferably in a concentration of 3 mol/L with respect to the volume of negative electrode electrolyte. This is possible since only one $Br^-$ is needed to reduce one $M^{[x+]}$ to $M^{[(x-1)+]}$. Therefore, the concentration of $M^{[x+]}$ and $Br^-$ may be the same. The concentration of $Br^-$ is preferably in the above ranges with the viewpoint of performance of the device in terms of achieving excellent capacity and power density.

The type of the thermally stable spectator anions and cations according to the invention is not particularly limited as long as they are thermally stable and inert. That is, they do not participate in any reaction, do not cause precipitation, are stable under all operating conditions and are not subject to any other reactions or decompositions in the half-cells. In addition, they advantageously increase the conductivity within the electrolytes.

Preferably, the thermally stable spectator anion is at least one selected from the group consisting of chloride ($Cl^-$), sulfate ($SO_4^{2-}$) and hydrogen sulfate ($HSO_4^-$) from the viewpoint of thermal stability and inertness. More preferably the anion is $Cl^-$.

Preferably, the thermally stable spectator cation is at least one of $H^+$ and a cation selected from group 1, 2 or 13 of the periodic table, such as $Li^+$, $Na^+$, $K^+$, $Rb^+$, $Cs^+$, $Be^{2+}$, $Mg^{2+}$, $Ca^{2+}$, $Sr^{2+}$, $Ba^{2+}$ and $Al^{3+}$ from the viewpoint of thermal stability and inertness. More preferably, the cation is at least one selected from the group consisting of $H^+$, $Na^+$, $K^+$, $Rb^+$, $Cs^+$, $Mg^{2+}$ and $Al^{3+}$. Even more preferably, the cation is at least one selected from the group consisting of $H^+$, $Na^+$, $K^+$, $Mg^{2+}$ and $Al^{3+}$. Particularly preferably, the cation is a combination of $H^+$ and $Na^+$, $H^+$ and $K^+$, $H^+$ and $Mg^{2+}$ or $H^+$ and $Al^{3+}$.

According to the present invention, the positive electrode half-cell and the negative electrode half-cell are linked to each other, such that the spectator cations can migrate between the half-cells but not the cation $M^{[x+]}$, the anion $Br^-$ and also not a cation $M^{[(x-1)+]}$ and $Br_2$, which both come into existence by the use of the device.

The electrolytes for the half-cells are chosen to provide a suitable source of the ions required to carry out the reactions in each half-cell.

In one embodiment of the invention, the positive electrode electrolyte and the negative electrode electrolyte are liquid electrolytes comprising a solvent for dissolving the anions and cations which are present in the electrolytes. In that case, the device further comprises a separator interposed between the positive electrode half-cell and the negative electrode half-cell to separate the positive electrode electrolyte and the negative electrode electrolyte from each other.

The separator is not particularly limited as long as it is cation-permeable with respect to the spectator cations but is impermeable to the cation $M^{[x+]}$, the anion $Br^-$ and also impermeable to a cation $M^{[(x-1)+]}$ and to $Br_2$, which both come into existence by the use of the device. Generally, when using a liquid electrolyte, the spectator cations usually include $H^+$. Thus, preferably, the separator is at least permeable with respect to $H^+$ for allowing fast and easy charge balancing between the two half-cells.

Suitable separators are made of any one of a perfluoro sulfonic acid polymer and a nonfluorinated aliphatic or aromatic hydrocarbon-based polymer, such as polyether ether ketone and polybenzimidazole. Conventional separators include, e.g., Nafion 112 (Du Pont), New Selemion (HSF membrane) (Asahi Glass Co., Japan) and Gore Select P-03430-membrane (W. L. Gore).

The solvent used in the liquid electrolytes is not particularly limited as long as it is suitable to dissolve the anions and cations of the electrolytes, is electrochemically stable and inert. That is, it does not participate in any reaction, does not cause precipitation, is stable under all operating conditions and is not subject to any other reactions or decompositions in the half-cells. Preferably, the solvent comprises an amine- and/or bromide and/or chloride-containing aqueous or non-aqueous solvent and a proton source, such as an acid from the viewpoint of complexing elemental bromine. More preferably, the solvent comprises an amine-containing aqueous or non-aqueous solvent and a proton source, such as an acid.

The amine-containing aqueous or non-aqueous solvent preferably acts as bromine complexing agent to capture

or immobilize elemental bromine, which comes into existence by the use of the device. This means that it is capable of binding $Br_2$ in such way that volatilization and migration from the negative electrode half-cell, where $Br_2$ is produced, to the positive electrode half-cell may be suppressed. Such known solvents include, e.g., pyridine. Pyridine forms together with HBr and elemental bromine pyridine hydrobromide perbromide, also called pyridinium tribromide according to the following equation:

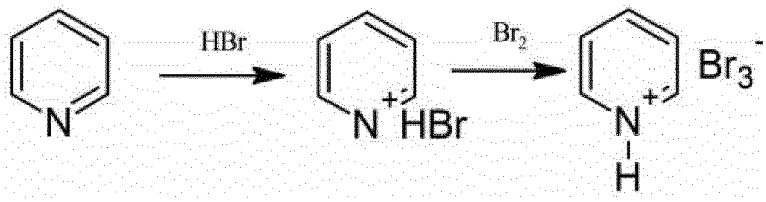


Thereby, the bromine is reversibly bound, meaning that pyridine acts as a reversible bromine scavenger.

Alternative bromine complexing agents include quaternary ammonium bromides, such as N-ethyl-N-methyl-morpholinium bromide (MEM), N-ethyl-N-methyl-pyrrolidinium bromide (MEP) and Tetra-butyl ammonium bromide (TBA), and other ammonium-containing compounds, such as tetramethyl ammonium perchlorate ($TMAClO_4$), being known to act as reversible bromine scavengers by forming an immiscible organic phase with $Br_2$.

Preferably, the proton source includes a carboxylic acid and/or a strong acid, such as hydrogen halide.

In a preferred embodiment of the present invention, the solvent is a combination of an amine-containing aqueous or non-aqueous solvent acting as bromine complexing agent, a carboxylic acid and hydrogen halide.

Examples include a combination of pyridine, hydrogen halide and acetic acid, or a combination of pyridine, hydrogen halide and propionic acid, which are preferred in view of their relative high boiling points of 120°C to 140°C. In case the device including the liquid electrolyte is used at temperatures exceeding said temperature range, the apparatus may need to be constructed such that it can be pressurized, i.e. be sealed, in order to prevent the solvent from leaking out in gaseous form.

The solvent used in the liquid electrolytes of the positive electrode half-cell and the negative electrode half-cell may be the same or different.

Preferably, the hydrogen halide is HBr when used in the negative electrode electrolyte, which serves as a further $Br^-$ source, and is HCl when used in the positive electrode electrolyte, which preferably comprises $Cl^-$ as spectator anion.

Optionally, the liquid electrolytes further comprise a pH buffer for stabilizing the pH of the electrolytes and avoiding undesired pH differences between the cells.

Exemplified liquid electrolytes comprising $FeBr_3$ as the thermolabile compound and a non-aqueous solvent may have the following compositions:

The negative electrode electrolyte in the negative electrode half-cell may comprise 1-15 mol/L acetic acid, 1-12 mol/L pyridine, 1-6 mol/L HBr and 0-5 mol/L NaBr. The positive electrode electrolyte in the positive electrode half-cell may comprise 1-15 mol/L acetic acid, 0-12 mol/L pyridine, 1-6 mol/L $FeCl_3$ and 1-6 mol/L HCl.

Exemplified liquid electrolytes comprising $FeBr_3$ as the thermolabile compound and an aqueous solvent may have the following compositions:

The negative electrode electrolyte in the negative electrode half-cell may comprise 1-55 mol/L water, 1-6 mol/L HBr, 1-3 mol/L NaBr and 0-2 mol/L pyridine. The positive electrode electrolyte in the positive electrode half-cell may comprise 1-55 mol/L water, 1-3 mol/L $FeCl_3$ and 0.1-1 mol/L HCl.

In another embodiment of the invention, the positive electrode electrolyte and the negative electrode electrolyte are solid electrolytes comprising a proton conducting material. Examples of proton conducting materials include proton-conducting ceramics (PCCs), polyoxometalates (POMs), covalent organic frameworks (COFs) and proton-conducting single crystals.

Specific examples of PCCs include proton conducting perovskite-type doped alkaline earth cerates and zirconates, such as $BaZr_{0.9}Y_{0.1}O_3$, proton conducting fluorite-type ceramics, such as gadolinium doped cerium oxide $Ce_{0.9}Gd_{0.1}O_{(2-d)}$, as well as metal oxides, such as $TiO_2$.

Specific examples of POMs include 3D lanthanide silicotungstic acid proton conductors, such as $La_{0.67}(H_2O)La(H_2O)_6[\{La(H_2O)_3(SiW_{11}O_{39})\}] \cdot 7H_2O$, and Dodecatungstophosphoric acid crystals, such as $H_3PW_{12}O_{40} \cdot H_2O$.

Specific examples of COFs include nanoporous membranes, which may be synthesized by reaction of 1,3,5-triformylphloroglucinol monomer and 2,6-dimethylbenzidine monomer.

Specific examples of proton-conducting single crystals include the following Beta-alumina with nominal composition $(NH_4^+)(H_3O^+)_{0.85}Al_{10.15}O_{17}$.

Generally, the solid electrolyte comprises a proton source, such as an acid. Preferably, the proton source is a

hydrogen halide, more preferably HBr or HCl. Particularly preferably, the hydrogen halide is HBr when used in the negative electrode electrolyte, which serves as a further $Br^-$-source and is HCl when used in the positive electrode electrolyte, which preferably comprises $Cl^-$ as spectator anion.

Preferably, the solid electrolyte comprises a compound for reversibly binding protons. Examples include pyridine. Generally, the solid electrolyte further comprises an inert electron conducting material, such as graphite, carbon black, silicon and/or magnetite. Preferable is the use of graphite, which is known to be able of intercalating elemental bromine.

Optionally, it furthermore includes $SiO_2$ for the reversible absorption of liquid components.

Exemplified solid electrolytes comprising $FeBr_3$ as the thermolabile compound may have the following compositions:

The negative electrode electrolyte in the negative electrode half-cell may comprise 1-6 mol/L HBr, 1-3 mol/L NaBr, 0-2 mol/L pyridine, pulverized POM, pulverized graphite and $SiO_2$. Alternatively, CsBr may be used instead of NaBr, which is known to dissolve in $Br_2$, to increase electrical conductivity and to reduce $Br_2$ vapor pressure.

The positive electrode electrolyte in the positive electrode half-cell may comprise 1-3 mol/L $FeCl_3$, 0.1-1 mol/L HCl, 0-2 mol/L pyridine, pulverized POM, pulverized graphite and $SiO_2$. Alternatively, in case $CuBr_2$ is used as the thermolabile compound, $CuCl_2$ may be used instead of $FeCl_3$.

In case of using the device in solid form, it is not mandatory to use a separator, but preferably, the two half-cells are separated by a barrier layer containing pure proton conducting material in order to avoid short circuiting of the device. Optionally, the device comprises a separator interposed between the positive electrode half-cell and the negative electrode half-cell. Examples include those mentioned in connection with the liquid electrolytes and furthermore include separators made of PCC, POM and COF in view of their thermal stability.

In yet another embodiment, the positive electrode electrolyte and the negative electrode electrolyte are low melting eutectic salts. In that case, the device further comprises a separator interposed between the positive electrode half-cell and the negative electrode half-cell to separate the positive electrode electrolyte and the negative electrode electrolyte from each other.

The separator is not particularly limited as long as it is cation-permeable with respect to the spectator cations but is impermeable to the cation $M^{[x+]}$, the anion $Br^-$ and also impermeable to a cation $M^{[(x-1)+]}$ and to $Br_2$, which both come into existence by the use of the device. Examples include those mentioned in connection with the liquid electrolytes and solid electrolytes above.

The low melting eutectic salts are not particularly limited. In one embodiment, the low melting eutectic salts include ionic liquids. In another embodiment, the low melting eutectic salts include $AlBr_3$ or a combination of NaCl, KCl and $AlCl_3$.

Generally, the low melting eutectic salts further comprise pyridine hydrobromide or pyridine hydrochloride. Preferably, the negative electrode electrolyte comprises pyridine hydrobromide and the positive electrode electrolyte comprises pyridine hydrochloride.

Exemplified low melting eutectic salt-based electrolytes comprising $FeBr_3$ as the thermolabile compound may have the following compositions, the components being included in mole fractions:

The negative electrode electrolyte in the negative electrode half-cell may comprise 0.1-0.8 NaBr, 0-0.8 pyridine, 0-0.8 HBr and 0.05-0.8 $AlBr_3$. The positive electrode electrolyte in the positive electrode half-cell may comprise 0.1-0.8 $FeCl_3$, 0-0.8pyridine, 0-0.8 HCl and 0.05-0.8 $AlCl_3$.

Exemplified low melting eutectic salt-based electrolytes comprising $CuBr_2$ as the thermolabile compound may have the following compositions, the components being included in mole fractions:

The negative electrode electrolyte in the negative electrode half-cell may comprise 0.1-0.6 NaBr, 0.05-0.3 NaCl, 0.05-0.2 KCl and 0.3-0.8 $AlCl_3$. The positive electrode electrolyte in the positive electrode half-cell may comprise 0.1-0.6 $CuCl_2$, 0.05-0.3 NaCl, 0.05-0.2 KCl and 0.3-0.8 $AlCl_3$.

A device according to the invention comprising a solid electrode electrolyte or a low melting eutectic salt has the advantage that the components are thermally more stable and do not evaporate at higher temperatures, which would otherwise require pressure technology as explained above.

The means for heating and cooling of the device according to the invention are not particularly limited as long as they are suitable to deliver heating or cooling medium to the at least one electrolyte. Examples include any conventional internal or external heat exchangers, pipes, plates, sheets, panels, spirals, jackets, internal or external coils for conducting heating or cooling transfer medium.

In one embodiment of the invention, the device comprises means for cooling of the device. This is of particular interest when the device is scaled up so that passive cooling to ambient temperature, i.e. cooling through heat radiation to the environment, cooling fans or cooling fins, may either not suffice or would take too long.

The electrodes used in the device according to the invention are not particularly limited and can be selected from any suitable material. Preferably, the positive electrode and negative electrode are each made of silicon, an inert metal, magnetite, or each are a carbon-based electrode or carbon nanotube modified electrode made of materials, such

as glassy carbon, graphite, pyrosealed graphite flow plates, carbon black (such as industrial carbon black), porous carbon, carbon paste, single-walled carbon nanotubes (SWCNTs), graphene nanosheets, Super P, recycled carbon, a combination of carbon and silicon or each are a carbon paper electrode from the viewpoint of performance as well as thermal and chemical resistance. The inert metal means a metal being stable against acids (protons), the used anions and cations as well as elemental bromine. Examples of inert metals include platinum, tantalum and gold.

The cell walls and other parts of the device are not particularly limited and can be made from suitable organic or inorganic materials, such as steel, and/or comprise an inside coating. Preferably, the inside coating is made at least from one of Enamel, glas, graphite, polyvinylidenifluoride (PVDF), polyvinylidenifluoride-hexafluoropropylene (PVDF-HFP), fluororubber, such as FPM and FFKM, ethylene chlorotrifluoroethylene (ECTFE), ethylene tetrafluoroethylene (ETFE), fluorinated ethylene propylene (FEP), tetrafluoroethylene perfluoromethylvinylether (MFA), polychlorotrifluoroethylene (PCTFE), perfluoroalkoxy alkanes (PFA), Teflon (PFTE) or a polyamide from the viewpoint of thermal and chemical resistance.

*[Method of converting thermal energy into electrical energy by using the device]*

The present invention further relates to a method of converting thermal energy into electrical energy by using the device as described above, comprising:

1) establishing a conductive connection between the positive electrode half-cell and the negative electrode half-cell so that electrons can migrate between the half-cells;

2) heating of the positive electrode electrolyte and/or negative electrode electrolyte via an external heat source to a temperature of 90°C to 300°C, thereby driving a reaction of the following equations:

$$Br^- \rightarrow ½\ Br_2 + e^-$$

$$M^{[x+]} + e^- \rightarrow M^{[(x-1)+]}$$

with M and x being as defined above,
and thereby generating a current flow;

3) active or passive cooling of the previously heated positive electrode electrolyte and/or negative electrode electrolyte to a temperature at which the back reaction according to the following equations takes place:

$$M^{[(x-1)+]} \rightarrow M^{[x+]} + e^-$$

$$½\ Br_2 + e^- \rightarrow Br^-$$

with M and x being as defined above,
and thereby generating a current flow in the opposite direction to the current flow generated in step 2).

This principle is based on temperature switch. When switching between two different temperatures as operating points, there is a reversible change in the chemical equilibrium between the ionic components of the thermolabile compound, which is divided in the two half-cells. The reason for this is that for these systems there is a temperature at which their so-called Gibbs energy, also known as free enthalpy, is 0 joules. Any change above or below this specific temperature causes the free enthalpy to change to positive or negative values. As a result, the system never is in equilibrium at any operating point, leading to the generation of a current flow between the two half-cells, whereby electrical energy may be harvested.

Upon heating at least one of the electrolytes, electrons can flow from the negative electrode half-cell to the positive electrode half-cell via a conductive connection between both half-cells and electrical energy is generated in the form of a current flow.

After cooling the previously heated electrolyte, electrons flow back from the positive electrode half-cell to the negative electrode half-cell via the conductive connection and energy is generated again.

The device therefore supplies electrical energy permanently, i.e. upon heating and upon cooling, whereby the heating and cooling steps can be repeated as often as required and can be interrupted and resumed at any point without damaging the device.

This unique process allows harvesting electrical energy twice per cycle. That is, electrical energy produced by the current flow generated in steps 2 and 3 may either be directly used, stored or be subject of power conversion after step 2 and before step 3 and/or after step 3 of the method according to the invention.

A further advantage of the system is that there is no risk of a "thermal run-away". This is because the reaction of step 2) is an endothermic process and that of step 3) is an exothermic process. Due to these opposing effects, namely self-cooling of the hot electrolyte and vice versa, the system is intrinsically safe.

The temperature supplied to the at least one electrolyte for heating is in the range of 90°C to 300°C, preferably in the range of 90°C to 280°C, more preferably in the range of 120°C to 230°C, even more preferably in the range of 130°C to 160°C and particularly preferably in the range of 130°C to 140°C.

The temperature may vary depending on the thermolabile compound used in the system.

In case of $CuBr_2$, relatively high temperatures in the range of 230°C to 290°C, preferably in the range of 265°C to 280°C may be used. More preferably, a temperature of 280°C is supplied to the at least one electrolyte in view of the thermal decomposition temperature of $CuBr_2$.

In case of $FeBr_3$, temperatures in the range of 100°C to 150°C, preferably in the range of 125°C to 140°C may be used. More preferably, a temperature of 140°C is supplied to the at least one electrolyte in view of the thermal decomposition temperature of $FeBr_3$.

In case of $MoBr_4$, temperatures in the range of 90°C to 170°C, preferably in the range of 100°C to 140°C may be used. More preferably, a temperature between 110°C and 130°C is supplied to the at least one electrolyte in view of the thermal decomposition temperature of $MoBr_4$.

In case of $WBr_3$, temperatures in the range of 100°C to 150°C, preferably in the range of 125°C to 140°C may be used. More preferably, a temperature of 140°C is supplied to the at least one electrolyte in view of the thermal decomposition temperature of $WBr_3$.

In one embodiment of the invention, the positive electrode electrolyte and negative electrode electrolyte are both heated.

The temperature in step 3) at which the back reaction of the redox reaction takes place is below 90°C, preferably is below 70°C, more preferably is below 55°C, even more preferably is in the range of -10°C to 50°C and particularly preferably is in the range of 0°C to 40°C.

Preferably, there is sufficient temperature difference between the heating step 2) and the cooling step 3) of 20°C or more, preferably 30°C or more, more preferably 40°C or more, even more preferably 50°C or more and particularly preferably 60°C or more in view of avoiding an undesired switch between the reaction of step 2) and that of step 3), resulting in possible power reductions. This may happen if the active/passive cooling or heating is slower than the adiabatic temperature development due to the chemical processes during harvesting of electrical energy.

Thus, where needed, the conductive connection between the positive electrode half-cell and the negative electrode half-cell can be interrupted. This might, e.g., be of advantage after the heating step 2) until the system is cooled to a desired temperature before again establishing the conductive connection. The same is also applicable during heating of the electrolytes in case heat may not or not constantly be supplied with a certain temperature.

The external heat source used in the method of the invention is not particularly limited and any kind of heat may be supplied to the system. In a preferred embodiment of the invention, the external heat source is heat waste, solarthermy, geothermy, nuclear fission at a nuclear power plant or in spacecrafts, or is nuclear fusion. Heat waste, solarthermy and geothermy are preferable in viewpoint of representing sustainable sources.

In a further preferred embodiment of the invention, the cooling is effected by the use of ambient or cooled air or other gaseous or liquid medium suitable for cooling, heat radiation to surrounding environment, a molten salt or evaporation of a fluid, such as water. Depending on the size of the device, cooling may be effected in a passive way, meaning that the device is not actively cooled, but allowed to cool to ambient temperature, or may be effected in an active way.

Cooling may be effected either in a passive or an active manner. Passive cooling means letting the system cooling down to ambient temperature by heat radiation to the surrounding environment. This may e.g. be implemented if the device is in a small version. Active cooling means the supply of cooling medium to the device. This is of particular interest if the device is scaled up and/or two or more devices are connected to form a module.

*[Module]*

The present invention further relates to a module comprising two or more devices according to the present invention. This allows the device to be scaled up to any desired size finding a wide range of applications. The module may, e.g., be used as power source for households, as energy source for industry, or for long-distance networks as intermediate storage device.

The two or more devices are thereby electrically connected in series and/or in parallel, allowing for the adjustment of the voltage and current of the device/module.

Furthermore, due to the modular design, already heated electrolytes may be used to preheat cold electrolytes, which halves the amount of heat needed to heat the electrolytes by about 105 $MJ/m^3$.

*[Energy saving system]*

The present invention further relates to an energy saving system, comprising the device according to the invention and a capacitor, a superconducting magnetic energy storage system or an accumulator coupled to the device for storing the electrical energy generated by said device.

This design allows for the storage of the produced electrical energy without the need of direct use.

The capacitor, the superconducting magnetic energy storage system and the accumulator are not particularly limited, and any conventional system known for the storage of electricity may be used.

*[Battery]*

The present invention further relates to a battery, comprising a positive electrode half-cell comprising a positive electrode and a positive electrode electrolyte; a negative electrode half-cell comprising a negative electrode and a negative electrode electrolyte; a conductive connection between the positive electrode half-cell and the negative electrode half-cell; and a thermolabile compound of formula 1 as defined above,
wherein in the discharged state of the battery, the positive electrode electrolyte comprises the cation $M^{[x+]}$ with x being an integer as defined in claim 1 and further thermally stable spectator anions for charge compensation, and the negative electrode electrolyte comprises the anion $Br^-$ and further thermally stable spectator cations for charge compensation, and in the charged state of the battery, the positive electrode electrolyte comprises the cation $M^{[(x-1)+]}$ with x being an integer as defined in claim 1 and further thermally stable spectator anions for charge compensation, and the negative electrode electrolyte comprises $Br_2$,
wherein the positive electrode half-cell and the negative electrode half-cell are linked to each other, such that the spectator cations can migrate between the half-cells but not the cations $M^{[x+]}$ and $M^{[(x-1)+]}$, the anion $Br^-$ and $Br_2$.

The battery allows storage of energy in a chemical form and conversion of the chemical energy into electrical energy when needed, i.e. upon usage of the battery, such as conventional batteries. Alternatively, the battery may be used as part of an energy transmission grid, a power plant etc..

Since the battery and the device are structured in the same way, all embodiments and preferred embodiments described above in connection with the device according to the invention also do apply to the battery.

*[Method of charging the battery]*

The present invention further relates to a method of charging the battery by converting thermal energy of an external heat source into chemical energy, comprising

1) establishing a conductive connection between the positive electrode half-cell and the negative electrode half-cell so that electrons can migrate between the half-cells;

2) heating of the positive electrode electrolyte and/or negative electrode electrolyte via an external heat source to a temperature of 90°C to 300°C for a time period of 1 minute to 5 hours, thereby driving a reaction according to the following equations:

$$Br^- \rightarrow \tfrac{1}{2} Br_2 + e^-$$

$$M^{[x+]} + e^- \rightarrow M^{[(x-1)+]}$$

with M and x being as defined above;

3) interrupting the conductive connection between the positive electrode half-cell and the negative electrode half-cell so that electrons can no longer migrate between the half-cells;

4) active or passive cooling of the previously heated positive electrode electrolyte and/or negative electrode electrolyte to ambient temperature.

The battery is fully charged as soon as all cations $M^{[x+]}$ have been reduced to $M^{[(x-1)+]}$ and all $Br^-$ has been oxidized to $Br_2$. This is the case once the required minimum temperature has been reached in the electrolyte or electrolytes. Kinetic inhibitions are not to be expected. Depending on the heating medium used, it is assumed that the battery is charged within 1 min to 5h.

The charged battery comprises in the positive electrode electrolyte the cation $M^{[(x-1)+]}$ and in the negative

electrode electrolyte $Br_2$. These components are thermodynamically stable at elevated temperature. At ambient temperature, components $M^{[x+]}$ and $Br^-$ are the thermodynamically stable components. However, because the conductive connection between the half-cells is interrupted at elevated temperature, conversion to the thermodynamically stable components at ambient temperature is prevented as long as the battery is stored, i.e. not in use.

Implemented thermal energy may thus be converted into chemical energy, which may be stored in that form and converted into electrical energy when needed. This is simply done by establishing a conductive connection between the positive electrode half-cell and the negative electrode half-cell upon usage of the battery. The battery generates electrical energy as long as the back reaction of the redox reaction takes place. As soon as the battery is discharged, i.e. all cations $M^{[(x-1)+]}$ have been oxidized to $M^{[x+]}$ and all $Br_2$ has been reduced to $Br^-$, it may be charged again by implementing heat. This may be repeated as often as desired without damaging the battery.

In a preferred embodiment of the invention, the external heat source is heat waste, solarthermy, geothermy, nuclear fission at a nuclear power plant or in spacecrafts, or is nuclear fusion. Heat waste, solarthermy and geothermy are preferable in viewpoint of representing sustainable sources.

In a further preferred embodiment of the invention, the cooling is effected by the use of ambient or cooled air or other gaseous or liquid medium suitable for cooling, heat radiation to surrounding environment, a molten salt or evaporation of a fluid, such as water. Depending on the size of the device, cooling may be effected in a passive way, meaning that the device is not actively cooled, but allowed to cool to ambient temperature, or may be effected in an active way.

The present invention will now be explained in detail on specific thermolabile compounds, by way of non-limiting example only.

*[Calculation of cell voltages, half-cell potentials and electrical energy]*

When implementing, for example, $FeBr_3$ as the thermolabile compound, the following overall reaction takes place in both half-cells:

| | |
|---|---|
| Anode: | $2\,Br^- \rightarrow Br_2 + 2e^-$ |
| Cathode: | $2\,Fe^{3+} + 2e^- \rightarrow 2\,Fe^{2+}$ |
| Total: | $2\,Fe^{3+} + 2\,Br^- \rightarrow 2\,Fe^{2+} + Br_2$ |

Standard reduction half-cell potentials of the half-cell reactions according to the literature are as follows:

| | |
|---|---|
| $\frac{1}{2}Br_2(l) + e^- \rightarrow Br^-(aq)$ | V = 1,07 V |
| $Fe^{3+} + e^- \rightarrow Fe^{2+}$ | V = 0,77 V |

This results in a cell voltage U of 0.3 V (1,07 V - 0,77 V) using standard conditions.

Assuming a heating temperature $T_H$ of 130°C (403 K), which is an optimal temperature in view of the thermal decomposition temperature of $FeBr_3$, and a cooling temperature $T_K$ of 5°C (278 K), i.e. optimal conditions, the Carnot efficiency w may be calculated according to the following formula:

$$w = (T_H - T_K)/T_H$$

$$w = (403\ K - 278\ K)/403\ K$$

$$w = 0.31$$

The theoretically maximum possible efficiency $\eta$ of the conversion of thermal energy into electrical energy is obtained from the quotient of electrical work W and chemical heat energy $Q_R$ for the decomposition reaction of the thermolabile compound according to the following formula:

$$\eta = W / Q_R$$

According to M. Armbruster et al., "Über Eisentribromid: Untersuchungen von Gleichgewichten, Kristallstruktur und spektroskopische Charakterisierung", Z. Anorg. Allg. Chem., 2000, 626, pp. 187-195, the decomposition enthalpy $\Delta H$ for the decomposition of $FeBr_3$ at a temperature of 400 K is as follows:

$$\Delta H_{400K} \text{ for } FeBr_3 = 15.1 \pm 0.3 \text{ kcal/mol.}$$

Thus, the chemical heat energy $Q_R$ is 63.1 kJ/mol (with 1 cal = 4.18 J $\rightarrow \Delta H_{400K}$ = 15.1 x 4.18 kJ/mol = 63.1 kJ/mol) .

Conversion of elementary charge into electrical energy may be calculated as follows:

$$1 \text{ electron} = 1.60218 \times 10^{-19} \text{ coulombs C}$$

The energy density at 1 mol/L, corresponding to 1 mol electrons/L, is 96485 C = 26.8 Ah.

Using the average voltage U between the half-cells of 0.3 V, this gives a maximum expected electric work W of:

$$W_{1mol} = 0.3 \text{ V} \times 26.8 \text{ Ah} = 8.04 \text{ Wh} = 28.944 \text{ kJ/mol}$$

This, in turn, gives a maximum efficiency as follows:

$$\eta = W / Q_R$$

$$\eta = 28.944 \text{ kJ/mol} / 63.1 \text{ kJ/mol} = 0.46$$

Thus, the theoretical maximum efficiency for the heating step can be expected to be 46 %. Since the same amount of electricity is generated upon cooling, an overall maximum efficiency during one cycle is expected to be 92 %.

The theoretical maximum efficiency, however, is reduced by loss factors. The largest loss factor is the heating temperature required to heat up the electrolyte or electrolytes per cycle. A temperature change from 293 K to 393 K, for example, results in heat inputs per $m^3$ of a 1 molar electrolyte of about 63.1 MJ for the thermolabile compound and about 2.1 MJ/K x 100 K = 210 MJ for the electrolyte. Furthermore, also the concentration of the thermolabile compound plays an important role when determining the efficiency.

When assuming a concentration of $Fe^{3+}$ in the positive electrode half-cell to be 3 mol/L and considering losses in terms of a respective heat input, the efficiency per cycle may be calculated as follows:

$$[2 \text{ (heating + cooling)} \times 3 \text{ (3 mol/L } Fe^{3+}) \times 28.944 \text{ MJ}] / [210 \text{ MJ} + (3 \times 63.1 \text{ MJ})] = 6 \times 28{,}944 / 399{,}3 = 0{,}43$$

The efficiency per cycle therefore realistically is 43%.

Due to a modular design, already heated electrolytes may be used to preheat cold electrolytes, thereby halving the amount of heat needed to heat the electrolytes by about 105 MJ/$m^3$, i.e. by 50%. Thus, the modular design may bring an electrolyte heat recovery of up to 50%.

The efficiency of such a cycle with 50% electrolyte heat recovery may be calculated as follows:

$$[2 \text{ (heating + cooling)} \times 3 \text{ (3 mol/L } Fe^{3+}) \times 28.944 \text{ MJ}] / [(105 \text{ MJ} + (3 \times 63.1 \text{ MJ})] = 6 \times 28{,}944 / 294{,}3 = 0{,}59$$

The efficiency in that case realistically is 59%.

When assuming a concentration of $Fe^{3+}$ in the positive electrode half-cell to be 3 mol/L, the electrical work W of the device according to the invention is 24 Wh. Modular design and/or adjustment of the concentration of $Fe^{3+}$ allows the volumetric energy density to be set accordingly.

Expected efficiency and power density are higher compared to previously reported systems capable of directly converting heat to electrical energy. This makes economical operation of such a heat-to-electricity converting system

possible for the first time.

The present invention will now be explained in more detail by referring to specific embodiments.

[Specific *embodiments*]

**Embodiment 1:**

A device according to the invention is used. The thermolabile compound is $FeBr_3$. The electrodes are each a carbon-based electrode made of, e.g., graphite. The separator is a Nafion 112 (Du Pont) separator. The spectator cations used in the negative electrode electrolyte are $H^+$ and $Na^+$. The spectator anions used in the positive electrode electrolyte are $Cl^-$. The electrolytes used are non-aqueous liquid electrolytes with the following compositions:

The negative electrode electrolyte in the negative electrode half-cell comprises 1-15 mol/L acetic acid, 1-12 mol/L pyridine, 1-6 mol/L HBr and 0-5 mol/L NaBr.

More specifically, the positive electrode electrolyte in the positive electrode half-cell comprises 1-15 mol/L acetic acid, 0-12 mol/L pyridine, 1-6 mol/L $FeCl_3$ and 1-6 mol/L HCl.

The device walls and other parts of the device are made of steel having an inside coating made of TEFLON or polyamide.

The device operates as follows:

First, a conductive connection between the positive electrode half-cell comprising the positive electrode electrolyte and the negative electrode half-cell comprising the negative electrode electrolyte is established. In a second step, heat from an external heat source in a temperature range of 125°C to 140°C is supplied to the electrolytes via a heat exchanger. The device is pressurized in case of need in order to be able to reach higher temperatures without solvent leakage in gaseous form. Thereby, a reaction of the following equation is driven:

$$Br^- \rightarrow \tfrac{1}{2} Br_2 + e^-$$

$$Fe^{3+} + e^- \rightarrow Fe^{2+}$$

whereby a current flow from the negative electrode half-cell to the positive electrode half-cell is generated.

The thus produced electrical energy may either be directly used, i.e. by passing the electrical energy through a consumer or may be stored by passing the electrical energy through a capacitor, a superconducting magnetic energy storage system or an accumulator.

Simultaneously, $H^+$ and/or $Na^+$ flows through the separator from the negative electrode electrolyte to the positive electrode electrolyte for charge balancing.

The generated elemental bromine is reversibly complexed by pyridine and HBr to form pyridine hydrobromide perbromide.

In a third step, the previously heated electrolytes are cooled in an active manner by supplying cooling medium to the electrolytes to a temperature between 0° and 50°C. Alternatively, in case the device is small sized or designed with a large surface-to-volume ratio, passive cooling may be effected by letting the system cool down to ambient temperature via heat radiation and/or conduction and/or convection to the environment. In either case, the back reaction according to the following equations takes place:

$$Fe^{2+} \rightarrow Fe^{3+} + e^-$$

$$\tfrac{1}{2} Br_2 + e^- \rightarrow Br^-$$

whereby a current flow is generated in the opposite direction to the current flow generated in the second step, i.e. from the positive electrode half-cell to the negative electrode half-cell.

The thus produced electrical energy may be directly used, i.e. by passing the electrical energy through a consumer or may be stored by passing the electrical energy through a capacitor, a superconducting magnetic energy storage system or an accumulator for a second time.

Simultaneously, $H^+$ and/or $Na^+$ flow through the separator from the positive electrode electrolyte to the negative electrode electrolyte for charge balancing.

The mode of action of the novel system can be explained by the fact that $Fe^{2+}$ is thermodynamically more stable at elevated temperatures above 100°C and $Fe^{3+}$ is thermodynamically more stable at temperatures below 100°C when conductively connected with bromide ions and/or bromine in accordance with the reversible thermal decomposition

reaction of $FeBr_3$:

$$2\ FeBr_3 \rightleftharpoons 2\ FeBr_2 + Br_2$$

That is, the generation of electric energy is driven by a reversible change of temperatures in the half-cells in both directions, i.e. from hot to cold and *vice versa,* by making use of the working principle of the thermolabile compound. This allows for harvesting electric energy twice per cycle, which greatly improves the efficiency of the device.

The heating and cooling steps can be repeated as often as required and can be interrupted and resumed at any point without damaging the device and without power loss or the occurrence of a memory effect. The device is capable of deep discharge and can be discharged to a final discharge voltage of 0 V without damage, thereby improving cycle life.

The system not only allows for the storage of electrical energy, but for the storage of heat as well, which is of particular advantage when stacking two or more devices to form a module. The device is free of any toxic, rare and cost-effective materials and enables, because of its simple design, a user-friendly commissioning.

**Embodiment 2:**

The device is the same as described in Embodiment 1, except that aqueous liquid electrolytes with the following compositions have been used.

The negative electrode electrolyte in the negative electrode half-cell comprises 1-55 mol/L water, 1-6 mol/L HBr, 1-3 mol/L NaBr and 0-2 mol/L pyridine.

The positive electrode electrolyte in the positive electrode half-cell comprises 1-55 mol/L water, 1-3 mol/L $FeCl_3$ and 0.1-1 mol/L HCl.

The device operates in the same manner as described in Embodiment 1.

**Embodiment 3:**

The device is the same as described in Embodiment 1, except that a solid electrolyte is used. In that case, the separator is not mandatory, but a thin layer of POM has been used as precaution. The solid electrolytes have the following compositions:

The negative electrode electrolyte in the negative electrode half-cell comprises 1-6 mol/L HBr, 1-3 mol/L NaBr, 0-2 mol/L pyridine, pulverized POM, pulverized graphite and $SiO_2$.

The positive electrode electrolyte in the positive electrode half-cell comprises 1-3 mol/L $FeCl_3$, 0.1-1 mol/L HCl, 0-2 mol/L pyridine, pulverized POM, pulverized graphite and $SiO_2$. Otherwise, the device operates in the same manner as described in Embodiment 1.

**Embodiment 4:**

The device is the same as described in Embodiment 3, except that CsBr has been used instead of NaBr, which is known to dissolve in $Br_2$, to increase electrical conductivity and to reduce $Br_2$ vapor pressure.

The device operates in the same manner as described in Embodiment 3.

**Embodiment 5:**

The device is the same as described in Embodiment 1, except that a low melting salt is used as the electrolyte. The use of a separator is mandatory. The electrolytes have the following compositions, the components being included in mole fractions:

The negative electrode electrolyte in the negative electrode half-cell comprises 0.1-0.8 NaBr, 0-0.8 pyridine, 0-0.8 HBr and 0.05-0.8 $AlBr_3$.

The positive electrode electrolyte in the positive electrode half-cell comprises 0.1-0.8 $FeCl_3$, 0-0.8 pyridine, 0-0.8 HCl and 0.05-0.8 $AlCl_3$.

Otherwise, the device operates in the same manner as described in Embodiment 1 with the exception that $Na^+$ flows between the half-cells for charge balancing.

**Embodiment 6:**

The device is the same as described in Embodiment 3, except that the thermolabile compound is $CuBr_2$.

The device operates in the same manner as described in Embodiment 1 with the exception that a temperature in a range of 265°C to 280°C is supplied to the electrolytes via a heat exchanger, thereby driving a reaction of the following equation:

$$Br^- \rightarrow \frac{1}{2} Br_2 + e^-$$

$$Cu^{2+} + e^- \rightarrow Cu^{1+}$$

whereby a current flow from the negative electrode half-cell to the positive electrode half-cell is generated.

Upon cooling, the back reaction according to the following equations takes place:

$$Cu^{1+} \rightarrow Cu^{2+} + e^-$$

$$\frac{1}{2} Br_2 + e^- \rightarrow Br^-$$

whereby a current flow is generated in the opposite direction to the previously generated current flow, i.e. from the positive electrode half-cell to the negative electrode half-cell.

**Embodiment 7:**

The device is the same as described in Embodiment 5, except that the thermolabile compound is $CuBr_2$.

The negative electrode electrolyte in the negative electrode half-cell comprises, in mole fractions, 0.1-0.6 NaBr, 0.05-0.3 NaCl, 0.05-0.2 KCl and 0.3-0.8 $AlCl_3$.

The positive electrode electrolyte in the positive electrode half-cell comprises, in mole fractions, 0.1-0.6 $CuCl_2$, 0.05-0.3 NaCl, 0.05-0.2 KCl and 0.3-0.8 $AlCl_3$.

The device operates in the same manner as described in Embodiment 6 with the exception that $Na^+$ flows between the half-cells for charge balancing.

Although detailed embodiments and examples have been described, these only serve to provide a better understanding of the invention defined by the independent claims and are not to be seen as limiting.

## Claims

**1.** A device for converting thermal energy of an external heat source into electrical energy, comprising

a positive electrode half-cell comprising a positive electrode and a positive electrode electrolyte;
a negative electrode half-cell comprising a negative electrode and a negative electrode electrolyte;
a conductive connection between the positive electrode half-cell and the negative electrode half-cell;
means for heating and optionally means for cooling the positive electrode electrolyte and/or negative electrode electrolyte; and
a thermolabile compound of the following formula 1:

[Formula 1] $M^{[+x]}Br^{[-1]}_x$

wherein M is selected from the group consisting of Fe, Cu, Mo and W, wherein [+x] indicates the oxidation state of M, [-1] indicates the oxidation state of Br, and x is an integer of 2 when M is Cu, is an integer of 3 when M is Fe or W and is an integer of 4 when M is Mo,
wherein the thermolabile compound is present in a divided form, such that
the positive electrode electrolyte comprises the cation $M^{[x+]}$, with [x+] indicating the charge of the cation and x being an integer as defined above, and further thermally stable spectator anions for charge compensation; and
the negative electrode electrolyte comprises the anion $Br^-$ and further thermally stable spectator cations for charge compensation, and
wherein the positive electrode half-cell and the negative electrode half-cell are linked to each other, such that the spectator cations can migrate between the half-cells but not the cation $M^{[x+]}$, the anion $Br^-$ and also not a cation $M^{[(x-1)+]}$ and $Br_2$, which both come into existence by the use of the device for converting thermal energy of an external heat source into electrical energy.

**2.** The device according to claim 1,

wherein the cation $M^{[x+]}$ is present in a concentration in the range of 0.5 mol/L to 15 mol/L, preferably 0.5 mol/L to 10 mol/L, more preferably in the range of 1 mol/L to 7 mol/L, even more preferably in the range of 2 mol/L to 5 mol/L, particularly preferably in the range of 2 mol/L to 4 mol/L and most preferably in a concentration of 3 mol/L with respect to the volume of positive electrode electrolyte, and
wherein $Br^-$ is present in a concentration in the range of x-fold 0.2 mol/L to 15 mol/L, preferably x-fold 0.5 mol/L to 10 mol/L, more preferably in the range of x-fold 1 mol/L to 7 mol/L, even more preferably in the range of x-fold 2 mol/L to 5 mol/L, particularly preferably in the range of x-fold 2 mol/L to 4 mol/L and most preferably in a concentration of x-fold 3 mol/L with respect to the volume of the negative electrode electrolyte with x being an integer as defined in claim 1.

**3.** The device according to claim 1 or 2,
wherein the thermally stable spectator anion is at least one selected from the group consisting of chloride ($Cl^-$), sulfate ($SO_4^{2-}$), and hydrogen sulfate ($HSO_4^-$), and preferably is $Cl^-$;
wherein the thermally stable spectator cation is at least one of $H^+$ and a cation selected from group 1, 2 or 13 of the periodic table, and preferably is at least one selected from the group consisting of $H^+$, $Na^+$, $K^+$, $Mg^{2+}$ and $Al^{3+}$.

**4.** The device according to any one of claims 1 to 3,
wherein the positive electrode electrolyte and the negative electrode electrolyte are liquid electrolytes comprising a solvent for dissolving the anions and cations which are present in the electrolytes, and
the device further comprises a separator interposed between the positive electrode half-cell and the negative electrode half-cell to separate the positive electrode electrolyte and the negative electrode electrolyte from each other, wherein the separator is cation-permeable with respect to the spectator cations but is impermeable to the cation $M^{[x+]}$, the anion $Br^-$ and also impermeable to a cation $M^{[(x-1)+]}$ and to $Br_2$, which both come into existence by the use of the device for converting thermal energy of an external heat source into electrical energy.

**5.** The device according to claim 4, wherein the solvent is an amine- and/or bromide and/or chloride-containing aqueous or non-aqueous solvent, preferably an amine-containing aqueous or non-aqueous solvent and more preferably a combination of pyridine, hydrogen halide and acetic acid, or a combination of pyridine, hydrogen halide and propionic acid.

**6.** The device according to claim 4 or 5, wherein the separator is made of any one of a perfluoro sulfonic acid polymer and a nonfluorinated aliphatic or aromatic hydrocarbon-based polymer, such as polyether ether ketone and polybenzimidazole.

**7.** The device according to any one of claims 1 to 3,
wherein the positive electrode electrolyte and the negative electrode electrolyte are solid electrolytes comprising proton conducting materials, or are low melting eutectic salts,
wherein in case the electrolytes are solid electrolytes, the device optionally comprises a separator interposed between the positive electrode half-cell and the negative electrode half-cell to separate the positive electrode electrolyte and the negative electrode electrolyte from each other, wherein the separator is cation-permeable with respect to the spectator cations but is impermeable to the cation $M^{[x+]}$, the anion $Br^-$ and also impermeable to a cation $M^{[(x-1)+]}$ and to $Br_2$, which both come into existence by the use of the device for converting thermal energy of an external heat source into electrical energy, and
wherein in case the electrolytes are low melting eutectic salts, the device further comprises a separator interposed between the positive electrode half-cell and the negative electrode half-cell to separate the positive electrode electrolyte and the negative electrode electrolyte from each other, wherein the separator is cation-permeable with respect to the spectator cations but is impermeable to the cation $M^{[x+]}$, the anion $Br^-$ and also impermeable to a cation $M^{[(x-1)+]}$ and to $Br_2$, which both come into existence by the use of the device for converting thermal energy of an external heat source into electrical energy.

**8.** The device according to any one of claims 1 to 7, wherein means for heating and cooling are internal or external heat exchangers, pipes, plates, sheets, panels, spirals, jackets, internal or external coils for conducting heating or cooling transfer medium to the electrolyte in the at least one half-cell.

**9.** The device according to any one of claims 1 to 8, wherein the positive electrode and negative electrode are made of silicon, glassy carbon; graphite; recycled carbon; a combination of silicon and carbon; an inert metal, such as tantalum or platinum; magnetite; pyrosealed graphite flow plates; carbon black, such as industrial carbon black; porous carbon; carbon paste; single-walled carbon nanotubes (SWCNTs); graphene nanosheets; or is a carbon

paper electrode.

**10.** A method of converting thermal energy into electrical energy by using the device as defined in any one of claims 1-9 comprising:

1) establishing a conductive connection between the positive electrode half-cell and the negative electrode half-cell so that electrons can migrate between the half-cells;
2) heating of the positive electrode electrolyte and/or negative electrode electrolyte via an external heat source to a temperature of 90°C to 300°C, thereby driving a reaction of the following equations:

$$Br^- \rightarrow \frac{1}{2} Br_2 + e^-$$

$$M^{[x+]} + e^- \rightarrow M^{[(x-1)+]}$$

with M and x being defined as in claim 1,
and thereby generating a current flow;
3) active or passive cooling of the previously heated positive electrode electrolyte and/or negative electrode electrolyte to a temperature at which the back reaction according to the following equations takes place:

$$M^{[(x-1)+]} \rightarrow M^{[x+]} + e^-$$

$$\frac{1}{2} Br_2 + e^- \rightarrow Br^-$$

with M and x being defined as in claim 1,
and thereby generating a current flow in the opposite direction to the current flow generated in step 2);
wherein electrical energy produced by the current flow generated in steps 2 and 3 is directly used, stored or is subject of power conversion after step 2 and before step 3 and/or after step 3.

**11.** A module comprising two or more devices as defined in any one of claims 1-9, wherein the two or more devices are electrically connected in series and/or in parallel.

**12.** An energy saving system, comprising:

the device according to any one of claims 1-9 for converting thermal energy from the external heat source into electrical energy; and
a capacitor or a superconducting magnetic energy storage system or an accumulator coupled to the device for storing the electrical energy generated by said device.

**13.** A battery, comprising
a positive electrode half-cell comprising a positive electrode and a positive electrode electrolyte;
a negative electrode half-cell comprising a negative electrode and a negative electrode electrolyte;
a conductive connection between the positive electrode half-cell and the negative electrode half-cell; and
a thermolabile compound of formula 1 as defined in claim 1,
wherein in the discharged state of the battery, the positive electrode electrolyte comprises the cation $M^{[x+]}$ with x being an integer as defined in claim 1 and further thermally stable spectator anions for charge compensation, and the negative electrode electrolyte comprises the anion $Br^-$ and further thermally stable spectator cations for charge compensation, and
in the charged state of the battery, the positive electrode electrolyte comprises the cation $M^{[(x-1)+]}$ with x being an integer as defined in claim 1 and further thermally stable spectator anions for charge compensation, and the negative electrode electrolyte comprises $Br_2$,
wherein the positive electrode half-cell and the negative electrode half-cell are linked to each other, such that the spectator cations can migrate between the half-cells but not the cations $M^{[x+]}$ and $M^{[(x-1)+]}$, the anion $Br^-$ and $Br_2$.

**14.** A method of charging the battery as defined in claim 13 by converting thermal energy of an external heat source into chemical energy, comprising

1) establishing a conductive connection between the positive electrode half-cell and the negative electrode half-cell so that electrons can migrate between the half-cells;

2) heating of the positive electrode electrolyte and/or negative electrode electrolyte via an external heat source to a temperature of 90°C to 300°C for a time period of 1 minute to 5 hours, thereby driving a reaction according to the following equations:

$$Br^- \rightarrow \frac{1}{2} Br_2 + e^-$$

$$M^{[x+]} + e^- \rightarrow M^{[(x-1)+]}$$

with M and x being defined as in claim 1;
3) interrupting the conductive connection between the positive electrode half-cell and the negative electrode half-cell so that electrons can no longer migrate between the half-cells;
4) active or passive cooling of the previously heated positive electrode electrolyte and/or negative electrode electrolyte to ambient temperature.

**15.** The method according to claim 10 or claim 14,
wherein the external heat source is heat waste, solarthermy, geothermy, nuclear fission at a nuclear power plant or in spacecrafts, or nuclear fusion, and
wherein the cooling is effected by the use of ambient or cooled air or other gaseous or liquid medium suitable for cooling, heat radiation to surrounding environment, a molten salt or evaporation of a fluid, such as water.

Europäisches Patentamt
European Patent Office
Office européen des brevets

# EUROPEAN SEARCH REPORT

Application Number
EP 21 20 3408

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/047961 A1 (MILLS RANDELL L [US]) 18 February 2021 (2021-02-18) * page 20, paragraph 0219 - page 105, paragraph 0748; claims 1-37; figures 1-41; tables 4, 8 * ----- | 1-15 | INV. H01M8/18 H01M8/04029 H01M8/04007 C25B15/021 C25B9/15 H01M8/22 H01M8/04014 F25B9/14 F25B23/00 H01M14/00 |
| X | STRICKER E. A. ET AL: "Investigating a Bromide Supported Electrolyte for an All-Copper Flow Battery", JOURNAL OF THE ELECTROCHEMICAL SOCIETY, [Online] vol. 165, no. 9, 15 May 2018 (2018-05-15), pages A1797-A1804, XP055910186, ISSN: 0013-4651, DOI: 10.1149/2.1031809jes Retrieved from the Internet: URL:https://iopscience.iop.org/article/10.1149/2.1031809jes/pdf> [retrieved on 2022-04-06] * abstract * * page A1797, paragraph Experimantal, page A1803, paragraph Conclusions; figures 1-9; table 1 * ----- | 1-15 | TECHNICAL FIELDS SEARCHED (IPC) |
| X | WO 2016/044586 A2 (UNIV CASE WESTERN RESERVE [US]) 24 March 2016 (2016-03-24) * page 4, paragraph 0022 - page 16, paragraph 0059; figures 1-10 * ----- | 1-15 | H01M C25B F25B |

The present search report has been drawn up for all claims

1

| Place of search | Date of completion of the search | Examiner |
|---|---|---|
| Munich | 10 April 2022 | Polisski, Sergej |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 21 20 3408

This annex lists the patent family members relating to the patent documents cited in the above-mentioned European search report. The members are as contained in the European Patent Office EDP file on
The European Patent Office is in no way liable for these particulars which are merely given for the purpose of information.

10-04-2022

| Patent document cited in search report | Publication date | Patent family member(s) | Publication date |
|---|---|---|---|
| US 2021047961 A1 | 18-02-2021 | AU 2014351491 A1 | 09-06-2016 |
| | | AU 2018217208 A1 | 30-08-2018 |
| | | AU 2020204330 A1 | 16-07-2020 |
| | | BR 112016011455 A8 | 05-05-2020 |
| | | CA 2931020 A1 | 28-05-2015 |
| | | CN 106414312 A | 15-02-2017 |
| | | CN 109244603 A | 18-01-2019 |
| | | EA 201691042 A1 | 30-12-2016 |
| | | EP 3071518 A1 | 28-09-2016 |
| | | JP 2017508235 A | 23-03-2017 |
| | | KR 20160093642 A | 08-08-2016 |
| | | KR 20210106021 A | 27-08-2021 |
| | | SG 10201907345T A | 27-09-2019 |
| | | TW 201521274 A | 01-06-2015 |
| | | US 2016290223 A1 | 06-10-2016 |
| | | US 2021047961 A1 | 18-02-2021 |
| | | WO 2015075566 A1 | 28-05-2015 |
| WO 2016044586 A2 | 24-03-2016 | AU 2015317679 A1 | 06-04-2017 |
| | | CN 107210473 A | 26-09-2017 |
| | | EP 3195399 A2 | 26-07-2017 |
| | | JP 2017532735 A | 02-11-2017 |
| | | KR 20170126436 A | 17-11-2017 |
| | | US 2018233763 A1 | 16-08-2018 |
| | | WO 2016044586 A2 | 24-03-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20180233763 A1
- WO 2019066651 A1


### Non-patent literature cited in the description


- **M. SKYLLAS-KAZACOS et al.** *Journal of The Electrochemical Society,* 2011, vol. 158 (8), 55-79
- **J.S. WAINRIGHT et al.** Investigation a bromide supported elekctrolyte for an all-copper flow battery. *Journal of the Electrochemical Society,* 2018, vol. 165 (9), A1797-A1804
- **J.-M. LANCETTE ; R. ROUSSEL.** A concentration cell with intercalated bromine. *Can. J. Chem.,* 1976, vol. 54, 3541-3544
- **K. SHINDO et al.** Influence of electrode materials on open-circuit voltage profiles with a temperature difference for a thermocell using a Br2/Br-redox reaction. *Journal of Power Sources,* 2002, vol. 110, 46-51
- **XUN WANG et al.** Direct thermal charging cell for converting low-grade heat to electricity. *Nature Communications,* 2019, vol. 10, 4151
- **D.L. HILDEN ; N.W. GREGORY.** Spectrophotometric Study of the Equilibrium between Copper (I) Bromide, Copper (II) Bromide, and Bromine. *J. Phys. Chem.,* 1971, vol. 75 (4), 592-595
- **H. SCHAFER ; R. SIEPMANN.** Die Wolframbromide W6Br12, W6Br14, W6Brl6 und W6Br18. *ZAAC,* 1968, vol. 357, 273-288
- **N.W. GREGORY ; B.A. THACKREY.** An Equilibrium Study of the Thermal Dissociation of Ferric Bromide. *J. Am. Chem. Soc.,* 1950, vol. 72 (7), 3176-3178
- **M. ARMBRUSTER et al.** Uber Eisentribromid: Untersuchungen von Gleichgewichten, Kristallstrukturen und spektroskopische Charakterisierung. *Z. Anorg. Allg. Chem.,* 2000, vol. 626, 187-195
- The Binary Halides of Molybdenum (IV) and Tungsten (IV) and the Oxochlorides of Tungsten (VI). **EDWARD ROY EPPERSON.** Dissertation. University of the Pacific, 1965
- **M. ARMBRUSTER et al.** Über Eisentribromid: Untersuchungen von Gleichgewichten, Kristallstruktur und spektroskopische Charakterisierung. *Z. Anorg. Allg. Chem.,* 2000, vol. 626, 187-195